# FASCICULE DE BREVET EUROPEEN

(11) **EP 2 792 594 B1**
(45) Date de publication et mention de la délivrance du brevet: **23.12.2015**
(21) Numéro de dépôt: 14001093.5
(22) Date de dépôt: 25.03.2014
(51) Int. Cl.: B64C 1/24, B64D 9/00

(54) **Marchepied amovible d'aéronef, et aéronef**
Abnehmbares Trittbrett für Flugzeuge, und Flugzeug
Removable foot-step for an aircraft, and aircraft

(30) Priorité: 16.04.2013 FR 1300888
(43) Date de publication de la demande: 22.10.2014
(73) Titulaire: Airbus Helicopters, 13725 Marignane Cedex (FR)
(72) Inventeur: Olive, Richard, F-13500 Martigues (FR)
(74) Mandataire: GPI & Associés

(56) Documents cités:
- EP-A1- 2 386 484
- WO-A1-2006/131645
- FR-A- 1 119 246

## Description

La présente invention concerne un marchepied amovible d'aéronef, et un aéronef comprenant ce marchepied.

L'invention se situe alors dans le domaine des techniques des marchepieds d'aéronef.

Classiquement, un aéronef comprend un fuselage s'étendant longitudinalement d'une extrémité avant vers une extrémité arrière de part et d'autre d'un plan antéropostérieur de symétrie, et selon une direction verticale d'une base équipée d'un train d'atterrissage vers un sommet.

Un giravion inclut de plus au moins un rotor principal de sustentation et de propulsion. Pour mettre en rotation le rotor principal, un giravion peut comporter une boîte de transmission de puissance entraîné par au moins un moteur reposant sur un plancher dénommé « plancher mécanique ».

Lors d'actions de maintenance, un opérateur peut devoir accéder à des zones de l'aéronef inaccessibles à partir du sol, par exemple les organes présents sur le plancher mécanique dans une partie haute de l'aéronef.

Pour permettre un accès sécurisé à de telles zones, un constructeur peut employer une échelle de maintenance. Bien que pratique, une échelle de maintenance s'avère de fait lourde et encombrante. Une telle échelle de maintenance peut dès lors être difficilement stockée dans un giravion de dimensions réduites.

De manière complémentaire ou alternative, un aéronef peut comprendre des marchepieds fixés de manière inamovible sur le fuselage. Les marchepieds saillent ainsi du fuselage. De tels marchepieds sont intéressants mais inesthétiques et lourds, voire être à l'origine d'une traînée aérodynamique pénalisante.

Les marchepieds peuvent éventuellement être masqués en étant articulés sur le fuselage par exemple. Ainsi, une marche pivotante peut masquer un orifice. Un opérateur peut alors basculer la marche pour prendre appui sur cette marche et ledit orifice. La localisation des marchepieds peut toutefois être difficile.

L'arrière plan technologique inclut les documents EP 2386484, US 2158949.

Le document EP 2386484 propose un marchepied intégré sur le fuselage d'un hélicoptère. Le marchepied comprend un boîtier intégré dans un flanc du fuselage et une marche montée pivotante dans le boîtier.

Le document US 2158949 propose aussi une marche pivotante montée à demeure sur un fuselage.

Des domaines techniques éloignés incluent les documents EP1888870, et WO 03/100204

Le document EP1888870 décrit une échelle.

Le document WO 03/100204 présente un dispositif de fixation d'une échelle à une façade.

On connaît aussi le document FR 1119246

La présente invention a alors pour objet de proposer un marchepied discret pour permettre l'accession à des organes d'un aéronef hors de portée d'un opérateur à partir du sol.

L'invention vise donc un marchepied d'aéronef, ce marchepied comprenant un ensemble d'appui muni d'un corps vertical portant une marche.

Le marchepied est notamment remarquable en ce que l'ensemble d'appui est portatif, ce marchepied incluant :
- au moins deux pions de fixation fixables à un fuselage d'un aéronef, le corps de l'ensemble d'appui comprenant un orifice de fixation par pion, et le corps étant porté par les pions lorsque ce corps est dirigé manuellement vers un fuselage pour faire pénétrer chaque pion dans un orifice de fixation,
- au moins un système de verrouillage porté par le corps pour verrouiller automatiquement la position d'au moins un pion dans un orifice de fixation,
- un moyen de déverrouillage manuel relié au système de verrouillage pour permettre la désolidarisation manuelle du corps et des pions.

Le marchepied comprend notamment un assortiment d'au moins deux pions qui sont fixés sur le fuselage d'un aéronef.

Les pions saillent du fuselage mais possèdent des dimensions ayant peu d'influence sur la traînée aérodynamique par exemple. De plus, ces pions ont une masse relativement faible.

L'utilisation de pions ayant par nature des dimensions restreintes permet aussi d'optimiser leur position. Cette installation est en effet moins tributaire des contraintes structurales de l'aéronef.

Cette installation ne nécessite notamment pas de réaliser des découpes dans le fuselage pour y intégrer un boîtier contrairement à certaines solutions antérieures.

De plus, le marchepied inclut aussi un ensemble d'appui portatif. Lorsqu'un opérateur doit accéder à des zones hors de portée à partir du sol, l'opérateur installe au moins un ensemble d'appui sur un assortiment de pions fixés au fuselage. L'opérateur fixe temporairement l'ensemble d'appui au fuselage par l'intermédiaire d'un assortiment de pions. La fixation est rapide, simple et temporaire.

De plus, l'ensemble d'appui peut être de dimensions favorables au confort et à la sécurité d'un opérateur. Cependant, ces dimensions restent restreintes comparées aux dimensions d'une échelle par exemple. L'ensemble d'appui a donc aussi une masse relativement faible et peut être stocké dans l'aéronef contrairement à une échelle.

L'agencement temporaire d'une marche sur un fuselage s'avère non évident et plus délicat que l'agencement d'une échelle reposant sur un sol. L'enseignement relatif aux échelles et donc très éloigné de l'invention qui doit faire face à des problèmes spécifiques.

L'agencement de l'ensemble d'appui sur un fuselage doit notamment être sécurisé pour éviter un incident.

Dès lors, le marchepied inclut au moins un système de verrouillage automatique.

Lorsque l'opérateur installe l'ensemble d'appui sur un assortiment de pions, ce système de verrouillage verrouille automatiquement la fixation de l'ensemble d'appui au fuselage.

Le moyen de déverrouillage doit au contraire être manoeuvrable manuellement et volontairement par l'opérateur. La fixation d'un ensemble d'appui est donc automatique pour éviter un oubli d'un opérateur. Au contraire, le retrait de cet ensemble d'appui requiert un acte volontaire d'un opérateur.

La combinaison revendiquée permet donc l'obtention d'un marchepied innovant sécurisé.

Le marchepied peut de plus comporter une ou plusieurs des caractéristiques additionnelles qui suivent.

Ainsi, chaque pion peut comprendre une base reliée à une tête par une tige qui a des dimensions inférieures aux dimensions de ladite tête. Par exemple, la tête est un cylindre de grand diamètre, la tige étant un cylindre de petit diamètre.

Dès lors, au moins un orifice de fixation peut être un orifice vertical comprenant une portion inférieure d'entrée qui est conformée à ladite tête pour permettre le déplacement de la tête au travers de la portion inférieure, ledit orifice de fixation comprenant une portion supérieure oblongue débouchant sur ladite portion inférieure et étant conformée à ladite tige pour permettre le coulissement selon la pesanteur de la portion supérieure autour de ladite tige jusqu'à un fond de la portion supérieure suite à l'insertion de la tête au travers de la portion inférieure.

Il est à noter que l'on qualifie de « vertical », une direction ou un organe s'étendant sensiblement selon la pesanteur.

Pour fixer un ensemble d'appui avec un tel orifice, un opérateur pousse le corps dudit ensemble vers un fuselage pour faire pénétrer un pion dans un orifice de fixation. Plus précisément un mouvement horizontal selon une direction dite de profondeur vers un fuselage induit le passage de la tête du pion au travers de la portion inférieure de l'orifice de fixation.

Lorsque la tige du pion atteint l'orifice de fixation, l'opérateur pousse l'ensemble d'appui vers le bas selon la pesanteur. La tige est alors en butée contre le fond de la portion supérieure.

Un tel orifice de fixation permet de bloquer l'ensemble d'appui par rapport au fuselage selon deux « directions et demie ». En effet, la partie supérieure oblongue de l'orifice de fixation permet de bloquer l'ensemble d'appui par rapport au pion selon deux directions horizontales, à savoir une direction sensiblement perpendiculaire au fuselage dite « direction horizontale de profondeur » et une autre direction sensiblement parallèle au fuselage dite « direction horizontale » par commodité.

En outre, l'ensemble d'appui ne peut pas se déplacer selon la pesanteur soit une « demie » direction.

Pour totalement bloquer l'ensemble d'appui selon la verticale, le marchepied comporte un système de verrouillage par orifice vertical.

Selon un mode de réalisation, l'ensemble d'appui peut comprendre deux orifices de fixation de type orifice vertical.

Selon un mode de réalisation alternatif, l'ensemble d'appui peut comprendre un orifice de fixation de type orifice vertical.

De plus, le marchepied peut comporter un orifice de fixation de type orifice horizontal comprenant une rainure horizontale ouverte sur l'extérieur dudit ensemble, ladite rainure s'étendant horizontalement dudit milieu extérieur vers un fond.

Il n'est pas obligatoire d'adjoindre un système de verrouillage à un tel orifice horizontal. En effet, un pion ne peut pas s'échapper selon la pesanteur d'un orifice horizontal.

Pour agencer l'ensemble d'appui, un opérateur peut positionner un pion dans l'orifice horizontal et ensuite peut positionner un pion dans l'orifice vertical.

Par ailleurs, au moins un système de verrouillage peut comprendre un levier rotatif pour bloquer selon la pesanteur la tige d'un pion dans la portion supérieure d'un orifice de fixation, le levier étant articulé au corps.

Le levier peut donc effectuer un mouvement rotatif pour maintenir un pion dans une portion supérieure d'un orifice vertical dans une position de blocage, et pour de ne pas entraver le mouvement d'un pion dans un orifice vertical dans une position débloquée.

Le système de verrouillage peut ainsi être un système mécanique simple.

De plus, ce système de verrouillage peut comprendre un moyen de rappel pour tendre à déplacer le levier d'une position débloquée permettant l'insertion d'un pion dans un orifice de fixation vers une position de blocage permettant le blocage de ce pion dans l'orifice de fixation, le moyen de rappel étant relié au levier et au corps.

La position naturelle du levier est donc la position de blocage. Seule une intervention manuelle permet d'armer le système en positionnant le levier dans la position débloquée. Cette caractéristique vise à optimiser la sécurité.

Le moyen de déverrouillage peut d'ailleurs comporter un moyen manuel de déverrouillage relié à chaque levier pour requérir le passage de la position de blocage vers la position débloquée. Ce moyen manuel de déverrouillage peut être un câble par exemple

Favorablement, le moyen de déverrouillage débouche sous la marche, pour ne pas être manoeuvré par erreur.

Pour entraîner le blocage d'un pion dans un orifice de fixation, le système de verrouillage peut comprendre une gâchette d'armement qui est mobile en translation selon une direction verticale d'une position désarmée permettant la fixation du corps à des pions vers une position armée permettant la désolidarisation du corps et des pions.

Lors du déplacement du pion dans un orifice de fixation, ce pion déplace la gâchette. Le déplacement de la gâchette libère le levier qui effectue une rotation pour bloquer un pion.

La gâchette peut alors comprendre un moyen d'immobilisation du levier et un organe de rappel reliant le moyen d'immobilisation à un point fixe du corps, le moyen d'immobilisation coopérant par interférence de forme avec ledit levier pour maintenir ledit levier dans ladite position débloquée, le moyen d'immobilisation coopérant avec un pion pour débloquer ledit levier suite à une insertion du pion dans l'orifice de fixation.

Le moyen d'immobilisation peut comprendre une plaque munie d'un plan d'arrêt apte à bloquer un ergot du levier pour le maintenir dans la position débloquée. Lors de la translation du moyen d'immobilisation sous la pression d'un pion, l'ergot glisse le long du plan d'arrêt pour autoriser la rotation du levier vers la position de blocage.

Par conséquent, un système de verrouillage inclut par exemple :
- un levier articulé au corps,
- une gâchette munie d'un moyen d'immobilisation qui est relié par un ressort de rappel à un point fixe du corps, le moyen d'immobilisation étant maintenu par le ressort de rappel contre l'orifice vertical en l'absence de pion, le moyen d'immobilisation coopérant par interférence de forme avec le levier pour maintenir ce levier dans ladite position débloquée, le moyen d'immobilisation étant monté coulissant dans ledit corps pour coulisser dans ledit corps lors du déplacement de ladite tige dans l'orifice vertical sous la pression de ladite tête, ledit moyen d'immobilisation libérant ledit levier à partir d'un seuil de translation.

En outre, le marchepied peut comporter un moyen d'éjection élastique en vis-à-vis d'une portion inférieure.

Ainsi, si un opérateur n'exerce pas un effort suffisant pour placer l'ensemble d'appui dans la position de blocage, le ressort de rappel tend à déplacer le moyen d'immobilisation selon la pesanteur. Le moyen d'immobilisation déplace alors à son tour le pion inséré dans l'orifice de fixation. A l'issue de ce déplacement, la tête du pion peut être en vis-à-vis de la portion inférieure de l'orifice de fixation.

Le moyen d'éjection exerce ensuite un effort sur la tête du pion pour l'éjecter en dehors de l'orifice de fixation.

Par conséquent, si un opérateur interrompt par accident ou par erreur la manoeuvre de fixation de l'ensemble d'appui à un pion, le système peut permettre l'éjection automatique du pion en dehors de l'orifice de fixation. Ainsi, l'opérateur ne risque pas de prendre appui sur un marchepied qui n'est pas correctement installé.

On comprend que le marchepied peut aussi posséder un dispositif de visualisation de la position du système de verrouillage. Par exemple, le corps peut être muni d'une lumière permettant d'estimer la position du levier par un code de couleur par exemple.

Par ailleurs, le corps peut comprendre un boîtier de verrouillage par système de verrouillage, chaque système de verrouillage étant porté par un boîtier de verrouillage.

Le corps peut avoir une niche définissant le boîtier, ou encore comprendre un organe plan vertical auquel est fixé le boîtier de verrouillage.

Par ailleurs, la marche est articulée au corps, selon une variante visant à réduire l'encombrement de l'ensemble d'appui dans une malle par exemple.

Le corps peut posséder une flamme de couleur visible lorsque la marche est déployée pour faciliter la visualisation du marchepied.

En outre, la marche peut comporter une poignée de préhension pour faciliter le transport de l'ensemble d'appui, ou servir de moyen de hissage pour l'utilisateur.

Par ailleurs, le corps peut comporter une pastille de visualisation visible par un opérateur par orifice de fixation pour permettre la localisation de chaque orifice de fixation.

Enfin, le corps comportant une face d'appui en vis-à-vis du fuselage, le marchepied peut posséder un revêtement disposé sur la face d'appui pour ne pas endommager le fuselage. Le revêtement peut couvrir partiellement ou totalement la face d'appui. Ce revêtement peut comprendre du caoutchouc ou tout matériau susceptible de protéger le fuselage contre des chocs.

Outre un marchepied, l'invention vise un aéronef muni d'un fuselage. Cet aéronef comporte alors au moins un marchepied selon l'invention, chaque pion étant solidaire du fuselage et saillant du fuselage, chaque ensemble d'appui étant portatif et pouvant être porté de manière temporaire par au moins deux pions.

L'invention et ses avantages apparaîtront avec plus de détails dans le cadre de la description qui suit avec des exemples de réalisation donnés à titre illustratif en référence aux figures annexées qui représentent :
- la figure 1, un schéma d'un aéronef selon l'invention,
- la figure 2, un schéma présentant un assortiment de pions d'un marchepied,
- la figure 3, un schéma présentant un ensemble d'appui d'un marchepied,
- la figure 4, une coupe d'un ensemble d'appui,
- la figure 5, un ensemble d'appui muni de deux orifices verticaux,
- la figure 6, un ensemble d'appui muni d'un orifice vertical et d'un orifice horizontal,
- les figures 7 à 12, des schémas présentant un système de verrouillage et son fonctionnement,
- les figures 13 et 14 des schémas présentant un pion bloqué selon « deux axes et demi », et
- la figure 15, une variante d'un moyen d'immobilisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite « direction horizontale transversale ».

La deuxième direction Y est dite « direction horizontale en profondeur » par commodité pour être distingué de la première direction.

Enfin, la troisième direction Z est dite « direction verticale ».

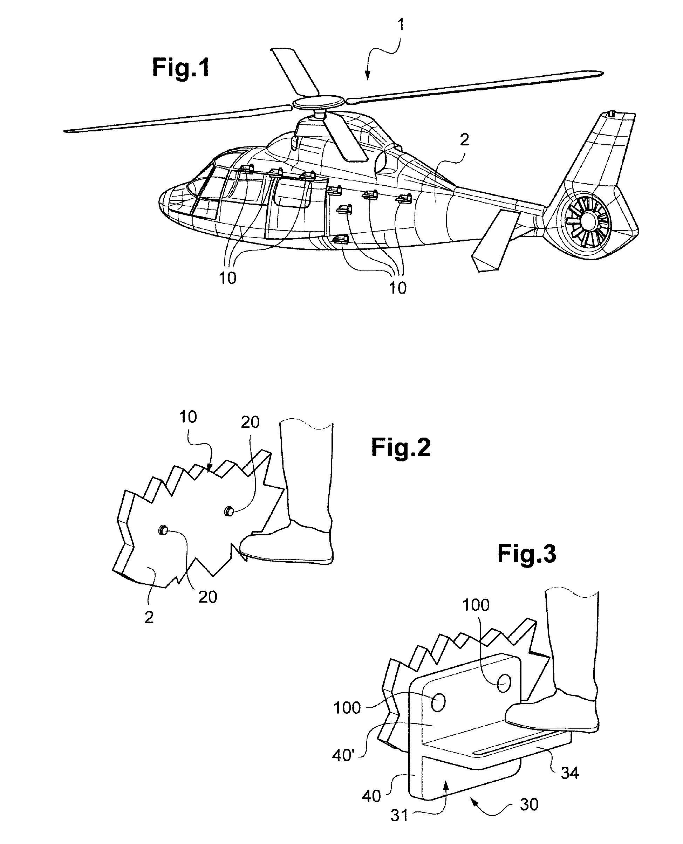

La figure 1 présente un aéronef 1 muni d'un fuselage 2. plus particulièrement, cet aéronef peut être un giravion muni notamment d'un rotor de sustentation porté par le fuselage 2.

Cet aéronef 1 est pourvu d'une pluralité de marchepieds 10.

En référence à la figure 2, un marchepied 10 comprend un assortiment de pions 20 fixés au fuselage.

De plus et en référence à la figure 3, un marchepied 10 possède un ensemble d'appui 30 portatif pouvant être suspendu au fuselage 2 par les pions 20.

Par exemple, le fuselage comprend une pluralité d'assortiments de pions disposés en une pluralité de zones de l'aéronef. Un ensemble d'appui peut alors être agencé en plusieurs zones différentes de l'aéronef.

L'ensemble d'appui 30 possède un corps 40 coopérant avec les pions. A cet effet, le corps 40 possède des orifices de fixation, masqués sur la figure 3, pouvant être enfilés sur les pions d'un assortiment.

Pour faciliter la mise en place du marchepied, le corps 40 peut posséder une pastille de visualisation 100 par orifice de fixation visible par un opérateur.

De plus, le corps peut aussi posséder un indicateur visuel de type flamme par exemple, pour qu'un opérateur visualise facilement la position d'un ensemble d'appui.

Par ailleurs, l'ensemble d'appui 30 inclut une marche 31 portée par le corps 40.

On note que la marche 31 peut être fixée dans une zone médiane du corps 40. Dès lors, la partie supérieure 40' du corps 40 fait écran entre le pied de l'opérateur et le fuselage, de manière à protéger ce fuselage contre un coup de pied par exemple.

Selon un autre aspect, l'ensemble d'appui est portatif. Par suite, la marche 31 peut comprendre une poignée de préhension 34. L'opérateur peut déplacer l'ensemble d'appui en se saisissant de la poignée de préhension 34.

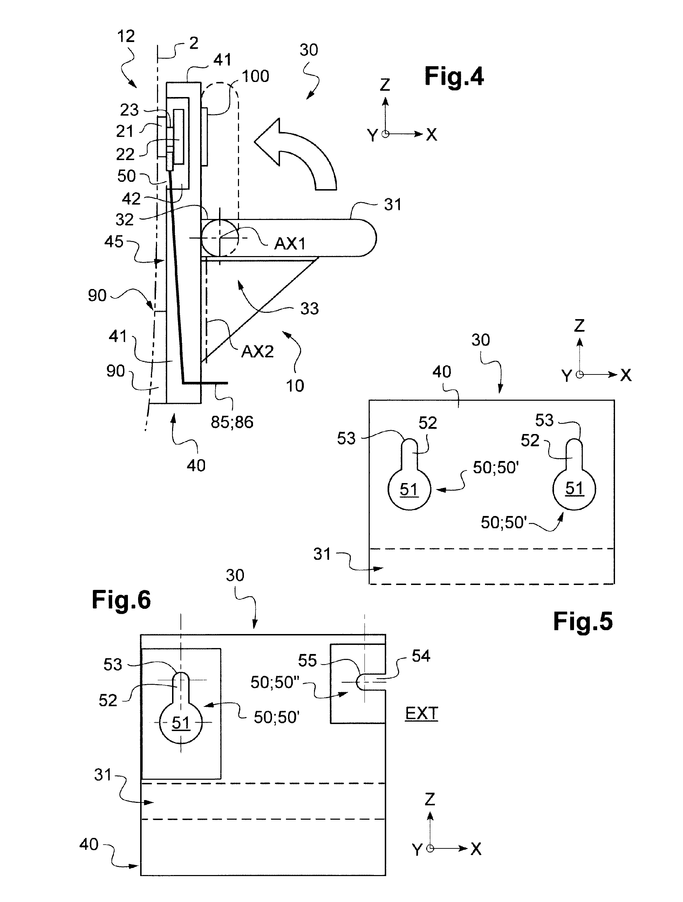

En référence à la figure 4, la marche 31 peut être articulée au corps 40 pour être pivotante. Par exemple, l'ensemble d'appui possède une articulation 32 pour articuler la marche 31 autour d'un axe de rotation horizontal AX1 s'étendant selon une direction horizontale transversale Y.

Eventuellement, l'ensemble d'appui comporte en complément un piétement 33 pliable qui est articulé selon un axe de rotation vertical AX2. Le piétement soutien alors la marche 31.

Pour protéger le fuselage, le marchepied peut être muni d'un revêtement 90 de protection disposé sur une face d'appui 45 du corps 40 en vis-à-vis du fuselage 2.

Par ailleurs, chaque pion 20 comprend une base 21 pouvant être fixée à un fuselage par des moyens usuels, une tête 22 et une tige 23 reliant la base 21 à la tête 22. Les dimensions de la tête 22 sont plus grandes que les dimensions de la tige 23. Ainsi, une section de la tête 22 présente une surface plus importante que la section de la tige 23.

Chaque orifice de fixation 50 est dimensionné pour permettre l'insertion et le déplacement de la tige 23 d'un pion dans cet orifice de fixation.

Ainsi et en référence à la figure 5, chaque orifice de fixation 50 peut être un orifice dit « orifice vertical 50' ».

Un orifice vertical 50' inclut une portion inférieure 51 d'entrée conformée à la tête 22 d'un pion 20. Autrement dit, la portion inférieure possède des dimensions permettant le passage de la tête 22 d'un pion au travers de cette portion inférieure. Lorsque la tête est un cylindre à base circulaire d'un premier diamètre, la portion inférieure 51 peut être de forme circulaire d'un deuxième diamètre plus grand que le premier diamètre.

De plus, un orifice vertical 50' comprend une portion supérieure 52 prolongeant vers le haut la portion inférieure jusqu'à une butée.

Ainsi, la portion supérieure 52 est une rainure oblongue débouchant sur la portion inférieure 51 et un fond 53. la portion supérieure 52 est conformée à la tige 23 d'un pion pour permettre le coulissement selon la pesanteur de la portion supérieure 52 autour de la tige 23 d'un pion jusqu'à un fond 53.

Pour suspendre le corps 40 à deux pions, l'opérateur pousse le corps 40 pour insérer les pions dans la portion inférieure des orifices de fixation, puis exerce une traction selon la pesanteur pour faire coulisser les portions supérieures des orifices de fixation autour des tiges des pions.

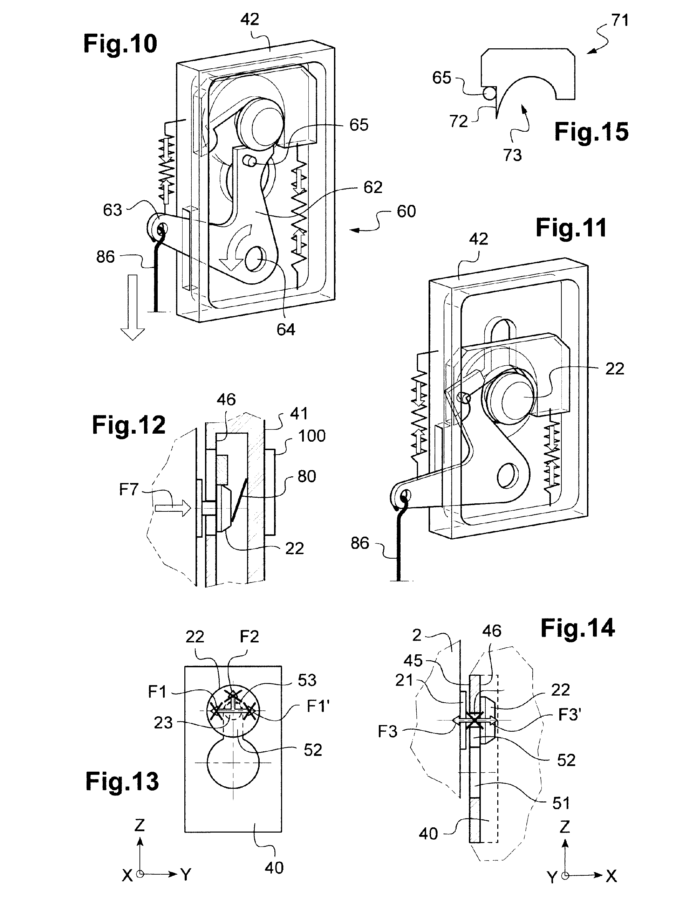

En référence à la figure 13, chaque tige 23 est alors bloquée dans la portion supérieure 52 selon une direction horizontale transversale représentée par les flèches F1, F1'.

De plus, chaque tige 23 est bloquée dans la portion supérieure 52 par le fond 53 selon un sens vertical vers le haut représenté par la flèche F2.

L'ensemble d'appui ne peut alors pas effectuer de mouvement par rapport au fuselage 2 selon ladite direction horizontale transversale et un sens vertical vers le bas opposé au sens vertical vers le haut.

En référence à la figure 14, l'ensemble d'appui ne peut non plus pas effectuer de mouvement par rapport au fuselage 2 selon une direction horizontale en profondeur représentée par les flèches F3 et F3'.

En effet, une paroi du corps 40 est coincée entre le fuselage 2 et la tête 22 des pions, cette tête 22 étant en appui contre une face interne 46 du corps dans laquelle sont ménagés les orifices de fixation.

En référence à la figure 6, l'ensemble d'appui 30 du marchepied peut comporter un orifice de fixation 50 de type orifice horizontal 50". Par exemple, un orifice vertical est combiné avec un orifice horizontal.

Un tel orifice horizontal comprend une rainure 54 horizontale débouchant sur un milieu extérieur EXT. Cette rainure 54 horizontale s'étend alors horizontalement du milieu extérieur EXT vers un fond 55.

La rainure horizontale est conformée à la dimension des tiges des pions.

Ainsi, l'opérateur insère en premier lieu une telle tige dans la rainure 54 horizontale et déplace transversalement l'ensemble d'appui jusqu'au fond 55 de cette rainure 54 horizontale. Ensuite, l'opérateur dispose l'autre pion dans un orifice vertical selon la méthode décrite précédemment.

En outre, le marchepied est équipé d'un système de verrouillage 60, schématisé sommairement sur la figure 4, pour bloquer verticalement l'ensemble d'appui non pas seulement selon un seul sens mais selon deux sens opposés. Eventuellement, le marchepied comporte un système de verrouillage par orifice vertical.

Le corps peut comprendre un organe présentant une niche pour accueillir le système de verrouillage.

A titre de variante, le corps 40 peut posséder un organe plan 41 et un boîtier de verrouillage 42. Chaque système de verrouillage 60 est alors porté par un boîtier de verrouillage 42 du corps. Ce boîtier comprend alors une paroi présentant un orifice de fixation du corps.

Ce système de verrouillage est un système automatique activé par l'insertion d'un pion dans un orifice de fixation.

L'ensemble d'appui est alors rendu solidaire du fuselage de façon automatique.

De plus, le marchepied inclut un moyen de déverrouillage 85 pour au contraire permettre la désolidarisation manuelle d'un ensemble d'appui. Le moyen de déverrouillage 85 comporte selon l'exemple représenté un moyen manuel de déverrouillage 86 de type câble débouchant sous la marche 31.

Le moyen de déverrouillage est alors lié mécaniquement et fonctionnellement au système de verrouillage.

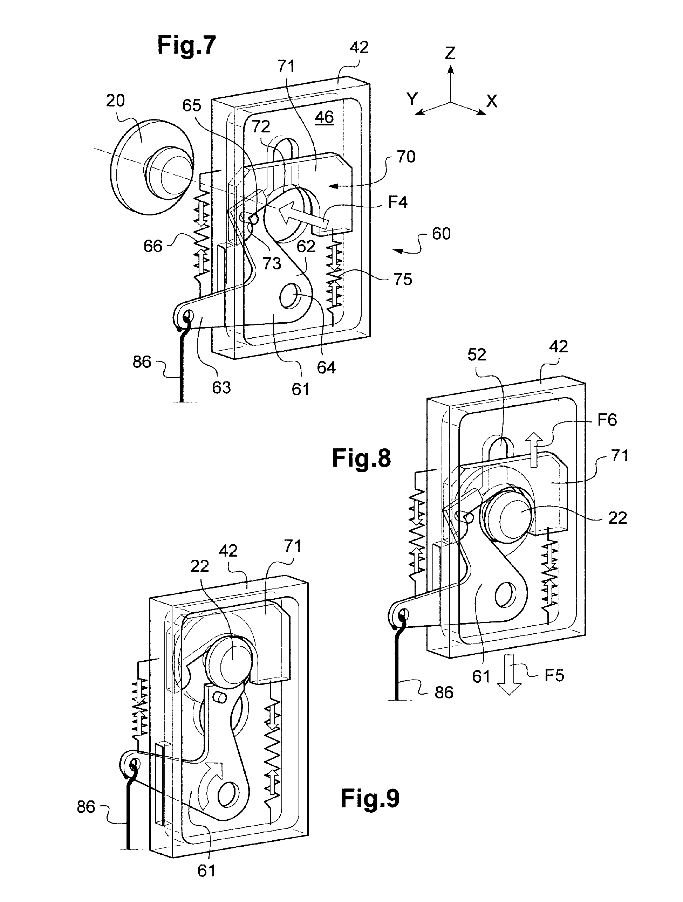

Les figures 7 à 12 explicitent une réalisation du système de verrouillage et du moyen de déverrouillage.

Ainsi, le système de verrouillage comprend un levier 61 articulé au corps 40, à savoir plus précisément un boîtier du corps selon l'exemple représenté.

Ce levier peut posséder une forme en L de manière à présenter une première branche 62 destinée au blocage d'un pion, et une deuxième branche 63 coopérant avec le moyen manuel de déverrouillage 86. L'intersection des deux branches est alors articulée au corps par une articulation 64.

Un ressort de rappel 66 peut aussi relier la deuxième branche 63 du levier 61 à un point fixe du corps, par exemple un point fixe du boîtier par exemple. Le ressort de rappel 66 tend à déplacer le levier en rotation vers l'orifice de fixation pour le blocage d'un pion dans cet orifice de fixation. Ainsi, le ressort de rappel 66 exerce un effort sur le levier pour le déplacer de la position débloquée de la figure 7 vers une position de blocage visible sur la figure 9.

On note que le levier n'obture pas l'orifice de fixation dans la position débloquée pour ne pas entraver l'insertion d'un pion dans cet orifice de fixation.

Par ailleurs, la figure 7 montre la présence d'une gâchette 70 d'armement. Cette gâchette 70 est mobile en translation selon une direction verticale Z d'une position désarmée permettant la fixation du corps 40 à des pions 20 vers la position armée de la figure 9.

Cette gâchette 70 comprend un moyen d'immobilisation 71 dudit levier 61 et un organe de rappel 75 reliant le moyen d'immobilisation 71 à un point fixe du corps 40 Lorsque le corps comporte un boîtier de verrouillage 42, le point fixe peut être un point de ce boîtier de verrouillage 42.

Le moyen d'immobilisation comprend une plaque accolée à une face interne 46 de la paroi du corps perforée par un orifice de fixation à sécuriser. Cette plaque est pourvue d'un plan d'arrêt 72 pouvant bloquer un ergot 65 du levier à leur intersection. Ce plan d'arrêt 72 peut être incliné selon la réalisation de la figure 7, ou encore être vertical selon la réalisation de la figure 15.

On note qu'à l'opposé du plan d'arrêt, le moyen d'immobilisation peut présenter un plan incliné 73 participant au réarmement du verrouillage.

Dès lors, en l'absence de pion, le moyen d'immobilisation est dans la position armée pour maintenir le levier dans la position débloquée. Le moyen d'immobilisation est accolé contre l'orifice de fixation sans l'obturer en totalité. En l'occurrence, le moyen d'immobilisation n'obture pas la portion inférieure de l'orifice de fixation.

Pour installer l'ensemble d'appui contre un fuselage, l'opérateur pousse alors l'ensemble d'appui vers le fuselage selon la flèche F4 pour introduire le pion dans l'orifice de fixation.

En référence à la figure 8, l'opérateur dirige alors l'ensemble d'appui vers le bas selon la flèche F5. La tige du pion se déplace alors dans la portion supérieure de l'orifice de fixation. En parallèle, la tête 22 du pion déplace le moyen d'immobilisation 71 selon la flèche F6. L'ergot du levier 61 glisse le long du plan d'arrêt du moyen d'immobilisation 71 pour s'en échapper.

En référence à la figure 9, le moyen d'immobilisation 71 libère alors le levier 61. Ce levier 61 effectue dès lors une rotation de manière à passer dans la position bloquée. Ce levier est ainsi accolé à la face interne en obturant partiellement la portion supérieure. Le pion est alors coincé verticalement entre le fond de l'orifice de fixation et le levier 61.

En référence à la figure 10 et pour enlever l'ensemble d'appui, l'opérateur tire sur le moyen manuel de déverrouillage 86. Le levier effectue alors une rotation vers sa position débloquée. En parallèle, le moyen d'immobilisation descend sous l'effort de l'organe de rappel 75 vers sa position armée. Eventuellement, l'opérateur pousse l'ensemble d'appui vers le haut pour faciliter la descente du pion vers la portion inférieure de l'orifice de fixation.

A l'issue de la manipulation et selon la figure 11, le pion peut alors sortir par la portion inférieure de l'orifice de fixation.

En référence à la figure 12, si l'opérateur ne conduit pas à son terme l'étape conduisant au blocage de l'ensemble d'appui contre un pion, le ressort de rappel et l'organe de rappel tendent à ramener le système de verrouillage dans la position initiale.

De plus, le marchepied peut comporter un moyen d'éjection 80 pour éviter de laisser l'ensemble d'appui dans une position instable. Ce moyen d'éjection comprend par exemple une lame ressort.

Ainsi, ce moyen d'éjection exerce sur la tête 22 un effort tendant à écarter l'ensemble d'appui du fuselage 2 selon la flèche F7.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Marchepied (10) d'aéronef (1), ce marchepied (10) comprenant un ensemble d'appui (30) muni d'un corps (40) vertical portant une marche (31),
**caractérisé en ce que** ledit ensemble d'appui (30) est portatif, ce marchepied (10) incluant :
- au moins deux pions (20) de fixation fixables à un fuselage (2) d'un aéronef (1), ledit corps (40) comprenant un orifice de fixation (50) par pion (20), ledit corps (40) étant porté par lesdits pions (20) lorsque ce corps (40) est dirigé manuellement vers un fuselage (2) pour faire pénétrer chaque pion (20) dans un orifice de fixation (50),
- au moins un système de verrouillage (60) porté par ledit corps (40) pour verrouiller automatiquement la position d'au moins un pion (20) dans un orifice de fixation (50),
- un moyen de déverrouillage (85) manuel relié au système de verrouillage (60) pour permettre la désolidarisation manuelle du corps (40) et des pions (20).

2. Marchepied selon la revendication 1,
**caractérisé en ce que** chaque pion (20) comprenant une base (21) reliée à une tête (22) par une tige (23) qui a des dimensions inférieures aux dimensions de ladite tête (22), au moins un orifice de fixation (50) est un orifice vertical (50') comprenant une portion inférieure (51) d'entrée qui est conformée à ladite tête (22) pour permettre le déplacement de la tête (22) au travers de la portion inférieure (51), ledit orifice de fixation (50) comprenant une portion supérieure (52) oblongue débouchant sur ladite portion inférieure (51) et étant conformée à ladite tige (23) pour permettre le coulissement selon la pesanteur de la portion supérieure (52) autour de ladite tige (23) jusqu'à un fond (53) de la portion supérieure (52) suite à l'insertion de la tête (22) au travers de la portion inférieure (51).

3. Marchepied selon la revendication 2,
**caractérisé en ce que** ledit marchepied (10) comporte un système de verrouillage (60) par orifice vertical (50').

4. Marchepied selon l'une quelconque des revendications 1 à 3,
**caractérisé en ce que** ledit marchepied (10) comporte un orifice de fixation (50) de type orifice horizontal (50") comprenant une rainure (54) horizontale ouverte sur un milieu extérieur (EXT) dudit ensemble d'appui (30), ladite rainure (54) s'étendant horizontalement dudit milieu extérieur (EXT) vers un fond (55).

5. Marchepied selon la revendication 2,
**caractérisé en ce qu'**au moins un système de verrouillage (60) comprend un levier (61) rotatif pour bloquer selon la pesanteur ladite tige (23) dans ladite portion supérieure (52) d'un orifice de fixation, ledit levier (61) étant articulé au corps (40).

6. Marchepied selon la revendication 5,
**caractérisé en ce que** ledit système de verrouillage (60) comprend un moyen de rappel (66) pour tendre à déplacer le levier (61) d'une position débloquée permettant l'insertion d'un pion (20) dans un orifice de fixation (50) vers une position de blocage permettant le blocage d'un pion (20) dans un orifice de fixation, le moyen de rappel (66) étant relié au levier (61) et au corps (40).

7. Marchepied selon l'une quelconque des revendications 5 à 6,
**caractérisé en ce que** ledit système de verrouillage (60) comprend une gâchette (70) d'armement qui est mobile en translation selon une direction verticale (Z) d'une position désarmée permettant la fixation du corps (40) à des pions (20) vers une position armée permettant la désolidarisation du corps (40) et des pions (20).

8. Marchepied selon la revendication 7,
**caractérisé en ce que** ladite gâchette (70) comprend un moyen d'immobilisation (71) dudit levier (61) et un organe de rappel (75) reliant le moyen d'immobilisation (71) à un point fixe du corps (40), le moyen d'immobilisation (71) coopérant par interférence de forme avec ledit levier (61) pour maintenir ledit levier (61) dans ladite position débloquée, le moyen d'immobilisation (71) coopérant avec un pion (20) pour débloquer ledit levier (61) suite à une insertion du pion (20) dans l'orifice de fixation (50).

9. Marchepied selon l'une quelconque des revendications 5 à 8,
**caractérisé en ce que**, ledit système de verrouillage inclut
- un levier (61) articulé au corps (40),
- une gâchette (70) munie d'un moyen d'immobilisation (71) relié par un ressort de rappel (75) à un point fixe du corps, le moyen d'immobilisation (71) étant maintenu par le ressort de rappel (75) contre l'orifice vertical (50') en l'absence de pion (20), le moyen d'immobilisation (71) coopérant par interférence de forme avec ledit levier (61) pour maintenir ledit levier (61) dans ladite position débloquée, le moyen d'immobilisation (71) étant monté coulissant dans ledit corps (40) pour coulisser dans ledit corps (40) lors du déplacement de ladite tige (23) dans l'orifice vertical (50') sous la pression de ladite tête (22), ledit moyen d'immobilisation (71) libérant ledit levier (61) à partir d'un seuil de translation.

10. Marchepied selon la revendication 2
**caractérisé en ce que** ledit marchepied (10) comporte un moyen d'éjection (80) élastique en vis-à-vis d'une portion inférieure (51).

11. Marchepied selon la revendication 2,
**caractérisé en ce que** ledit moyen de déverrouillage (85) comporte un moyen manuel de déverrouillage (86) relié à chaque levier (61).

12. Marchepied selon l'une quelconque des revendications 1 à 11,
**caractérisé en ce que** ledit corps (40) comprend un boîtier de verrouillage (42) par système de verrouillage (60), chaque système de verrouillage (60) étant porté par un boîtier de verrouillage (42).

13. Marchepied selon l'une quelconque des revendications 1 à 12,
**caractérisé en ce que** ladite marche (31) est articulée audit corps (40).

14. Marchepied selon l'une quelconque des revendications 1 à 13,
**caractérisé en ce que** ladite marche (31) comporte une poignée de préhension (34).

15. Marchepied selon l'une quelconque des revendications 1 à 14,
**caractérisé en ce que** ledit corps (40) comporte une pastille de visualisation (100) par orifice de fixation visible par un opérateur pour permettre la localisation de chaque orifice de fixation (50).

16. Marchepied selon l'une quelconque des revendications 1 à 15,
**caractérisé en ce que** ledit corps (40) comporte une face d'appui (45) en vis-à-vis du fuselage (2), le marchepied (10) ayant un revêtement (90) disposé sur ladite face d'appui (45) pour ne pas endommager ledit fuselage (2).

17. Aéronef (1) muni d'un fuselage (2),
**caractérisé en ce que** ledit aéronef (1) comporte au moins un marchepied (10) selon l'une quelconque des revendications 1 à 16, chaque pion (20) étant solidaire du fuselage (2) et saillant dudit fuselage (2), chaque ensemble d'appui (30) étant portatif et pouvant être porté de manière temporaire par au moins deux pions (20).

## Patentansprüche

1. Trittbrett (10) eines Luftfahrzeugs (1), wobei das Trittbrett (10) eine Stützeinheit (30) aufweist, welche mit einem vertikalen Körper (40) versehen ist, die eine Stufe (31) trägt,
**dadurch gekennzeichnet, dass** die Stützeinheit (30) tragbar ist, wobei das Trittbrett (10) aufweist:
- mindestens zwei Befestigungsstifte (20), die an einem Rumpf (2) eines Luftfahrzeugs (1) befestigbar sind, wobei der Körper (40) eine Befestigungsöffnung (50) pro Stift (20) aufweist, wobei der Körper (40) von den Stiften (20) getragen wird, wenn der Körper (40) manuell zu einem Rumpf (2) bewegt wird, um jeden Stift (20) in eine Befestigungsöffnung (50) eindringen zu lassen,
- mindestens ein Verriegelungssystem (60), welches von dem Körper (40) getragen wird, um automatisch die Lage mindestens eines Stiftes (20) in einer Befestigungsöffnung (50) zu verriegeln,
- ein manuelles Entriegelungsmittel (85), welches mit dem Verriegelungssystem (60) verbunden ist, um die manuelle Trennung des Körpers (40) und der Stifte (20) zu erlauben.

2. Trittbrett nach Anspruch 1,
**dadurch gekennzeichnet, dass** jeder Stift (20) eine Basis (21) aufweist, die mit einem Kopf (22) über einen Bolzen (23) verbunden ist, der Abmessungen aufweist, die kleiner als die Abmessungen des Kopfes (22) sind, wobei mindestens eine Befestigungsöffnung (50) eine vertikale Öffnung (50') ist, die einen unteren Eingangsbereich (51) aufweist, der an den Kopf (22) angepasst ist, um die Bewegung des Kopfes (22) durch den unteren Bereich (51) zu erlauben, wobei die Befestigungsöffnung (50) einen oberen, länglichen Bereich (52) aufweist, der in den unteren Bereich (51) mündet und an den Bolzen (23) angepasst ist, um das Gleiten des oberen Bereichs (52) um den Bolzen (23) herum in Richtung Schwerkraft zu erlauben, zu einem Boden (53) des oberen Bereichs (52) nach einer Einführung des Kopfes (22) durch den unteren Bereich (51).

3. Trittbrett nach Anspruch 2,
**dadurch gekennzeichnet, dass** das Trittbrett (10) ein System (60) zur Verriegelung durch eine vertikale Öffnung (50') aufweist.

4. Trittbrett nach einem der Ansprüche 1 bis 3,
**dadurch gekennzeichnet, dass** das Trittbrett (10) eine Befestigungsöffnung (50) vom Typ horizontale Öffnung (50") aufweist mit einer horizontalen Nut (54), die zur Außenseite (EXT) der Stützeinheit (30) hin offen ist, wobei die Nut (54) sich horizontal von der Außenseite (EXT) zu einem Boden (55) hin erstreckt.

5. Trittbrett nach Anspruch 2,
**dadurch gekennzeichnet, dass** mindestens ein Verriegelungssystem (60) einen drehbaren Hebel (61) aufweist, um den Bolzen (23) in Richtung Schwerkraft in dem oberen Bereich (52) einer Befestigungsöffnung zu blockieren, wobei der Hebel (61) an dem Körper (40) angelenkt ist.

6. Trittbrett nach Anspruch 5,
**dadurch gekennzeichnet, dass** das Verriegelungssystem (60) ein Rückholmittel (66) aufweist, das anstrebt, den Hebel (61) aus einer endblockierten Stellung zu bewegen, die das Einführen eines Stiftes (20) in eine Befestigungsöffnung (50) erlaubt, in ein Blockierstellung, die das Blockieren eines Stiftes (20) in einer Befestigungsöffnung erlaubt, wobei das Rückholmittel (66) mit dem Hebel (61) und dem Körper (40) verbunden ist.

7. Trittbrett nach einem der Ansprüche 5 bis 6,
**dadurch gekennzeichnet, dass** das Verriegelungssystem (60) eine Sicherungszuhaltung (70) aufweist, die in einer vertikalen Richtung (Z) translatorisch beweglich ist, aus einer entsicherten Stellung, die die Befestigung des Körpers (40) an den Stiften (20) erlaubt, in eine gesicherte Stellung, die das Lösen des Körpers (40) von den Stiften (20) erlaubt.

8. Trittbrett nach Anspruch 7,
**dadurch gekennzeichnet, dass** die Zuhaltung (70) ein Arretierungsmittel (71) des Hebels (61) und ein Rückholorgan (75) aufweist, das das Arretierungsmittel (71) mit einem festen Punkt des Körpers (40) verbindet, wobei das Arretierungsmittel (71) durch Formschluss mit dem Hebel (61) zusammenwirkt, um den Hebel (61) in der gelösten Stellung zu halten, wobei das Arretierungsmittel (71) mit einem Stift (20) zusammenwirkt, um den Hebel (61) nach einer Einführung des Stiftes (20) in die Befestigungsöffnung (50) zu lösen.

9. Trittbrett nach einem der Ansprüche 5 bis 8,
**dadurch gekennzeichnet, dass** das Verriegelungssystem umfasst:
- einen an den Körper (40) angelenkten Hebel (61),
- eine Zuhaltung (70) mit einem Arretierungsmittel (71), das über eine Rückholfeder (75) mit einem festen Punkt des Körpers verbunden ist, wobei das Arretierungsmittel (71) durch die Rückholfeder (75) gegen die vertikale Öffnung (50') in Abwesenheit des Stiftes (20) gehalten wird, wobei das Arretierungsmittel (71) durch Formschluss mit dem Hebel (61) zusammenwirkt, um den Hebel (61) in der gelösten Stellung zu halten, wobei das Arretierungsmittel (71) gleitend in dem Körper (40) montiert ist, um in dem Körper (40) während der Bewegung des Stiftes (23) in der vertikalen Öffnung (50') unter dem Druck des Kopfes (22) zu gleiten, wobei das Arretierungsmittel (71) den Hebel (61) ab einem Schwellenwert der Translation freigibt.

10. Trittbrett nach Anspruch 2,
**dadurch gekennzeichnet, dass** das Trittbrett (10) ein elastisches Auswurfmittel (80) gegenüber einem unteren Bereich (51) aufweist.

11. Trittbrett nach Anspruch 2,
**dadurch gekennzeichnet, dass** das Entriegelungsmittel (85) ein manuelles Entriegelungsmittel (86) aufweist, das mit jedem Hebel (61) verbunden ist.

12. Trittbrett nach einem der Ansprüche 1 bis 11,
**dadurch gekennzeichnet, dass** der Körper (40) ein Gehäuse (42) zur Verriegelung durch ein Verriegelungssystem (60) aufweist, wobei jedes Verriegelungssystem (60) von einem Verriegelungsgehäuse (42) getragen wird.

13. Trittbrett nach einem der Ansprüche 1 bis 12,
**dadurch gekennzeichnet, dass** die Stufe (31) an dem Körper (40) angelenkt ist.

14. Trittbrett nach einem der Ansprüche 1 bis 13,
**dadurch gekennzeichnet, dass** die Stufe (31) einen Handgriff (34) aufweist.

15. Trittbrett nach einem der Ansprüche 1 bis 14,
**dadurch gekennzeichnet, dass** der Körper (40) eine Sichtbarmachungsmarkierung (100) pro Befestigungsöffnung aufweist, die für eine Bedienungsperson sichtbar ist, um die Positionsbestimmung jeder Befestigungsöffnung (50) zu erlauben.

16. Trittbrett nach einem der Ansprüche 1 bis 15,
**dadurch gekennzeichnet, dass** der Körper (40) eine Auflagefläche (45) gegenüber dem Rumpf (2) aufweist, wobei das Trittbrett (10) eine Beschichtung (90) aufweist, die auf der Auflagefläche (45) angeordnet ist, um den Rumpf (2) nicht zu beschädigen.

17. Luftfahrzeug (1) mit einem Rumpf (2),
**dadurch gekennzeichnet, dass** das Luftfahrzeug (1) mindestens ein Trittbrett (10) nach einem der Ansprüche 1 bis 16 aufweist, wobei jeder Stift (20) fest mit dem Rumpf (2) verbunden ist, und gegenüber dem Rumpf (2) vorsteht, wobei jede Stützeinheit (30) tragbar ist und zeitweise von mindestens zwei Stiften (20) getragen werden kann.

## Claims

1. Footboard (10) for an aircraft (1), the footboard (10) comprising a support assembly (30) provided with a vertical body (40) carrying a tread (31),
**characterised in that** said support assembly (30) is portable, the footboard (10) including:
- at least two fastening pegs (20) fastenable to a fuselage (2) of an aircraft (1), said body (40) comprising one fastening orifice (50) per peg (20), said body (40) being carried by said pegs (20) when the body (40) is directed manually towards a fuselage (2) in order to cause each peg (20) to penetrate into a fastening orifice (50),
- at least one locking system (60) carried by said body (40) for automatically locking the position of at least one peg (20) in a fastening orifice (50),
- a manual unlocking means (85) connected to the locking system (60) to enable the body (40) and the pegs (20) to be separated manually.

2. Footboard according to claim 1,
**characterised in that** each peg (20) comprising a base (21) connected to a head (22) by a shank (23) of dimensions smaller than the dimensions of said head (22), at least one fastening orifice (50) is a vertical orifice (50') comprising a bottom inlet portion (51) which is conformed to said head (22) to enable the head (22) to pass through the bottom portion (51), said fastening orifice (50) comprising an oblong top portion (52) opening out into said bottom portion (51) and being conformed to said shank (23) in order to enable the top portion (52) to slide in the direction of gravity around said shank (23) until it reaches an end wall (53) of the top portion (52) after the head (22) has been inserted through the bottom portion (51).

3. Footboard according to claim 2,
**characterised in that** said footboard (10) comprises one locking system (60) per vertical orifice (50').

4. Footboard according to any one of claims 1 to 3,
**characterised in that** said footboard (10) comprises a fastening orifice (50) of a horizontal orifice type (50") comprising a horizontal slot (54) open to an external environment (EXT) of said support assembly (30), said slot (54) extending horizontally from said external environment (EXT) towards an end wall (55).

5. Footboard according to claim 2,
**characterised in that** at least one locking system (60) comprises a rotary lever (61) for blocking said shank (23) in said top portion (52) of a fastening orifice in the direction of gravity, said lever (61) being articulated to the body (40).

6. Footboard according to claim 5,
**characterised in that** said locking system (60) comprises a return means (66) for urging the lever (61) from an unblocked position enabling a peg (20) to be inserted in a fastening orifice (50) towards a blocking position enabling a peg (20) to be blocked in a fastening orifice, the return means (66) being connected to the lever (61) and to the body (40).

7. Footboard according to any one of claims 5 to 6,
**characterised in that** said locking system (60) comprises a setting latch (70) which is movable in translation in a vertical direction (Z) from an unset position enabling the body (40) to be fastened to pegs (20) towards a set position enabling the separation of the body (40) and the pegs (20).

8. Footboard according to claim 7,
**characterised in that** said latch (70) comprises a retention means (71) for retaining said lever (61) and a return member (75) connecting the retention means (71) to a fixed point of the body (40), the retention means (71) co-operating by shape interference with said lever (61) in order to hold said lever (61) in said unblocked position, the retention means (71) co-operating with a peg (20) to unblock said lever (61) following the insertion of the peg (20) in the fastening orifice (50).

9. Footboard according to any one of claims 5 to 8,
**characterised in that** said locking system includes
- a lever (61) articulated to the body (40),
- a latch (70) provided with a retention means (71) connected by a return spring (75) to a fixed point of the body, the retention means (71) being held by the return spring (75) against the vertical orifice (50') in the absence of a peg (20), the retention means (71) co-operating by shape interference with said lever (61) to hold said lever (61) in said unblocked position, the retention means (71) being slidably mounted in said body (40) to slide in said body (40) during the movement of said shank (23) in the vertical orifice (50') under the pressure of said head (22), said retention means (71) releasing said lever (61) from a threshold movement in translation.

10. Footboard according to claim 2,
**characterised in that** said footboard (10) comprises an elastic ejection means (80) facing a bottom portion (51).

11. Footboard according to claim 2,
**characterised in that** said unlocking means (85) comprises a manual unlocking means (86) connected to each lever (61).

12. Footboard according to any one of claims 1 to 11,
**characterised in that** said body (40) comprises one locking housing (42) per locking system (60), each locking system (60) being carried by a locking housing (42).

13. Footboard according to any one of claims 1 to 12,
**characterised in that** said footboard (31) is articulated to said body (40).

14. Footboard according to any one of claims 1 to 13,
**characterised in that** said footboard (31) comprises a gripping handle (34).

15. Footboard according to any one of claims 1 to 14,
**characterised in that** said body (40) comprises one display disc (100) per fastening orifice which is visible to an operator in order to enable each fastening orifice (50) to be located.

16. Footboard according to any one of claims 1 to 15,
**characterised in that** said body (40) comprises a bearing face (45) facing the fuselage (2), the footboard (10) having a coating (90) arranged on said bearing face (45) to avoid damaging said fuselage (2).

17. Aircraft (1) provided with a fuselage (2),
**characterised in that** said aircraft (1) comprises at least one footboard (10) according to any one of claims 1 to 16, each peg (20) being secured to the fuselage (2) and projecting from said fuselage (2), each support assembly (30) being portable and being able to be carried in a temporary manner by at least two pegs (20).
